# EUROPEAN PATENT APPLICATION

(11) **EP 4 275 983 A1**
(43) Date of publication of application: **15.11.2023**
(21) Application number: 23172120.0
(22) Date of filing: 08.05.2023
(51) Int. Cl.: B61B 7/00, B61D 27/00, B60H 1/00

(54) **ENERGY TRANSFER SYSTEM AND METHOD**

(30) Priority: 10.05.2022 US 202263339988 P
(71) Applicant: Raveh, Haim, 4906422 Petach Tikva (IL)
(72) Inventor: Raveh, Haim, 4906422 Petach Tikva (IL)
(74) Representative: Lapienis, Juozas

(57) **Abstract**

A system for cooling or heating an cabin of an aerial tramway system that includes an ingress liquid reservoir positioned on or inside the cabin, a heat exchanger positioned on or inside the cabin, a liquid chiller that is positioned in a station of the tramway system, and a station liquid reservoir that is positioned in the station and that is equipped with an external liquid valve. The liquid chiller bring liquids to a predetermined or specific temperature that are intended to be streamed into the station liquid reservoir, the station liquid reservoir supplies the liquid that is inside the station liquid reservoir to the ingress liquid reservoir through the external liquid valve and an outlet opening, and the liquids that are supplied to the ingress liquid reservoir are intended to be used for chilling or heating the cabin by the heat exchanger.

## Description

### RELATED APPLICATIONS

This application claims priority of a US provisional application number 63/339,988 filed on May 10, 2022.

### TECHNICAL FIELD

The present invention generally relates to the energy transfer system, and particularly to system and method for energy transfer system for air-conditioning, cooling, and/or heating in a remote vehicle such as an aerial tramway, passenger cabins, and/or similar transportation.

### BACKGROUND ART

An aerial lift and ground cabin, also known as a cable car, is a means of cable transport in which cabins, cars, gondolas, or open chairs are hauled above the ground, on the ground, or in the mine by means of one or more cables. Aerial lift systems are frequently employed in mountainous cities, mines, etc. where roads are busy and relatively difficult to build and use. Typically, such aerial traffic has very short stops and does not allow , high-weight, or big-volume, and has a short time and limits for energy charging.

Seat heating for chairlifts, gondolas, and combined is known, in which sliding brushes guide the power on the chairs. In the seats are heater elements that heat it as long as the electric brushes connect, mainly at the charging stations. From there, it is used to warm the heating pad in the seat pad while the chair is in transit through the station. The electric power stops once the chair leaves the station as the chairs have been heated to provide the passengers with warm seats.

Furthermore, overnight charging is also known in which the cabins, cars, or gondolas stop moving, and the batteries are directly recharged.

In compartments and carriages that hang on cables, such as carriages for transporting humans in cities and mountains, or even transportation in the horizontal plane, or transported on or off tracks, there is no simple, easy, and cheap way to transfer energy, mainly for air-conditioning, cooling and/or heating the chamber, because they consume big amount of energy. Therefore, there is a need for a quick, low weight, low price, easy to maintain, and reliable system for transferring lots of energy to a movable chamber while it is parking or moving, able to provide a proper air-conditioned environment mainly during moving.

### DESCRIPTION OF THE DRAWINGS

The intention of the drawings attached to the application is not to limit the scope of the invention and its application. The drawings are intended only to illustrate the invention, and they constitute only one of its many possible implementations.
FIG. 1 shows a schematic view of the system according to aspects of this disclosure;
FIG. 2 shows a schematic cross-sectional view of a movable chamber according to aspects of this disclosure;
FIG. 3 is a schematic representation of the liquid flow between the various compartments according to the recycled aspect of this disclosure;

### THE INVENTION

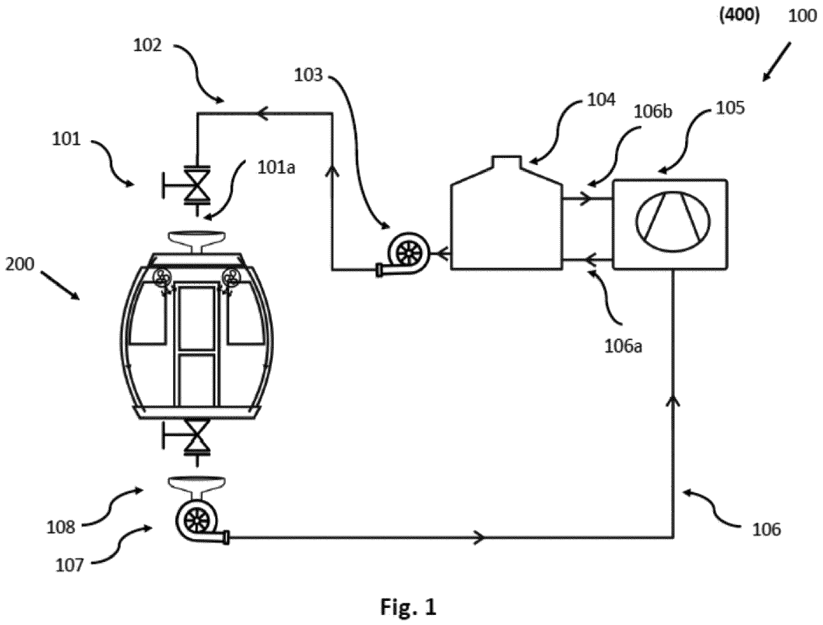

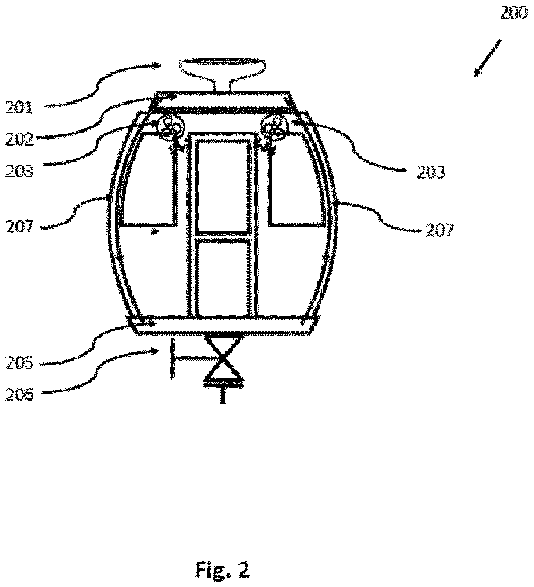

The present invention will be better understood upon reading the following description, provided solely as a non-limiting example and done in reference to the accompanying drawings, in which:
Provided in accordance with aspects of the present disclosure is a system and method for rather quickly charging heat, or cold liquid while moving at the charge/discharge station.
Reference is now made to FIG. 1 and FIG. 2 that illustrate the system 100 in which upon the arrival of the movable chamber 200 of the aerial tramway (hereinafter and in the claims "the aerial cabin") to a charging/discharging station (400), the process of transferring energy begins.

The stationed liquid reservoir 104 contains liquid that is kept at a predetermined or specific temperature set by a chiller 105.

When aerial cabin 200 arrives at the charging/discharging station (400), and an external liquid valve 101 is in alignment with an ingress funnel 201 that is located on the aerial cabin, a predetermined or a certain amount of liquid is poured from the stationed liquid reservoir 104 by an ingress liquid pump 103 or gravity through an ingress liquid pipe 102 and the ingress funnel 201 into an ingress insulated liquid reservoir 202.

The above-described liquid filling into the ingress liquid reservoir 202 is performed while the aerial cabin 200 slows down or stops (but doesn't necessarily stop), to allow people to leave or enter the aerial cabin 200.

When the aerial cabin 200 arrives at the charging/discharging station, and a liquid removing valve 206 is in alignment with a liquid removal funnel 108, the liquid is extracted from a liquid outlet reservoir 205 to be reused and flow by a liquid pump 107 through a liquid pipe 106 to the chiller 105. In another embodiment of the present disclosure, the liquid can also be disposed of.

The fluid in the ingress liquid reservoir 202, serves as an energy provider mainly to be used as air-conditioning of the aerial cabin. A heat exchanger 203 in the aerial cabin 200, which can be made of different materials, sizes, and shapes as needed, utilize the energy absorbed in the liquid to dissipate energy either cooling or heating. Dissipating energy can be done by using fans that need a small amount of energy, powered by a battery or supercapacitors that will be charged in a short time by electric brushes in the charging station. Upon usage of the liquid, its temperature changes (either cooled or heated), and it can no longer serve as an energy provider, hence should be removed or recycled. The used liquid may be moved from the ingress liquid reservoir 202, either gravitationally or by a pump, through a liquid drainage pipe 207 (represented in the drawings with a dashed line) to the liquid outlet reservoir 205 and exits the aerial cabin 200 in the charging/discharging station as described above.

In an embodiment of the present disclosure, it is possible to place the heat exchanger 203 at the front of the aerial cabin 200 and the flow of air from the movement of the aerial cabin is chilled or heated.

The chiller 105 is responsible for obtaining liquid and achieving the required temperature. The liquid then moves through an outlet chiller pipe 106a to the stationed liquid reservoir 104 where its temperature is maintained. If the liquid temperature in the stationed liquid reservoir 104 either drops or climbs beyond a predetermined tolerance temperature, they are moved back through an inlet chiller pipe 106b to the chiller 105, and its temperature is set again to the required temperature.

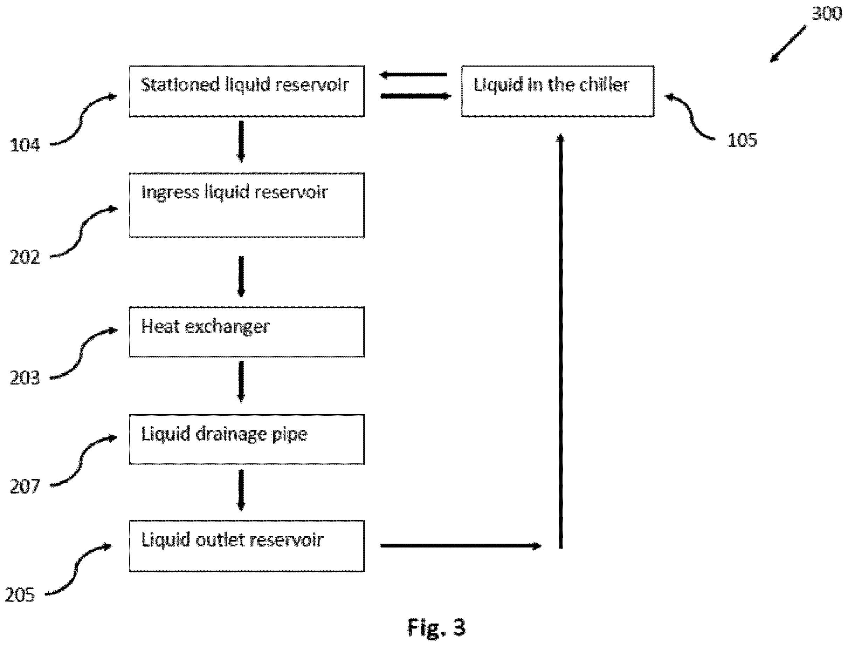

Reference is now made to Fig. 3 showing the circular flow 300 of the liquid within the system. Upon alignment requirements at the charging/discharging station between the aerial cabin 200 and the external liquid valve 101, the liquid at a predetermined temperature quickly leaves the stationed liquid reservoir 104 to the ingress liquid reservoir 202 where they are stored, and their temperature is maintained until there is a need to alter the aerial cabin 200 internal air temperature (either cooling or warming is required). The liquid flows to the heat exchanger 203 where its energy is transformed to either cool or heat the aerial cabin 200. Upon completion of the energy transformation, the exhausted liquid flow through the liquid drainage pipe 207 into the liquid outlet reservoir 205, and when the aerial cabin 200 reaches the next charging/discharging station, and the liquid removing valve 206 is aligned with the liquid removal funnel 108, the liquid is quickly removed from the liquid removing valve 206 and eventually enter the chiller 105 to be reused by either heating or cooling to a predetermined temperature and stored at the stationed liquid reservoir 104. Liquid from the stationed liquid reservoir 104 may be moved "back" to the chiller 105 if its temperature changes from the predetermined temperature.

In summary, the main objective of the present invention is to provide the system (100) for cooling or heating the aerial cabins (200) of the aerial tramway system. The system (100) may include the following elements: (a) an ingress funnel (201) that is positioned on the aerial cabin, (b) an ingress liquid reservoir (202) positioned on or inside the aerial cabin, (c) a heat exchanger (203) positioned on or inside the aerial cabin, (d) a liquid chiller (105) that is positioned in a station (400) of the aerial tramway system. (e) a station liquid reservoir (104) positioned in the station that is equipped with an external liquid valve (101). It is possible that the system will not include the ingress funnel and that the liquids will be streamed or poured directly to the ingress liquid reservoir, by gravitation or by a pump (103).

The liquid chiller is designed to bring liquids to a predetermined or specific temperature that is intended to be streamed into the station liquid reservoir.

The station liquid reservoir is designed to pour the liquid inside the station liquid reservoir through the external liquid valve and through an outlet opening (101a) into the ingress funnel when the ingress funnel is aligned with the outlet opening.

The liquids that are poured into the ingress funnel are intended to flow into the ingress liquid reservoir.

And, the liquids that are flowed into the ingress liquid reservoir are intended to chill or heat the aerial cabin by the heat exchanger.

The present invention also provides, as clearly understood from the above explanations, an aerial tramway system that includes a plurality of aerial cabins (200), a plurality of stations (400), and a plurality of systems (100) for cooling or heating the plurality of aerial cabins, as described above.

The aerial tramway system includes a plurality of aerial cabins (200) and a plurality of stations (400). Each aerial cabin includes an ingress liquid reservoir (202) and a heat exchanger (203), and each station includes a liquid chiller (105) and a station liquid reservoir (104) that is equipped with an external liquid valve (101). The liquid chiller of each station is designed to bring liquids to predetermine or specific temperatures that is intended to be streamed into the station liquid reservoir of that station. Each station liquid reservoir is designed to supply the liquid that is inside that station liquid reservoir to the ingress liquid reservoir of that station through the external liquid valve and an outlet opening (101a), and the liquids that are supplied to that ingress liquid reservoir are intended to be used for chilling or heating relevant aerial cabin by the heat exchanger.

## Claims

1. A system for cooling or heating an cabin of an aerial tramway system, comprising:
(a) an ingress liquid reservoir positioned on or inside the cabin;
(b) a heat exchanger positioned on or inside the cabin;
(c) a liquid chiller that is positioned in a station of the tramway system; and
(d) a station liquid reservoir that is positioned in the station and that is equipped with an external liquid valve;
wherein the liquid chiller is designed to bring liquids to a predetermined or specific temperature that are intended to be streamed into the station liquid reservoir;
wherein the station liquid reservoir is designed to supply the liquid that is inside the station liquid reservoir to the ingress liquid reservoir through the external liquid valve and an outlet opening; and
wherein the liquids that are supplied to the ingress liquid reservoir are intended to be used for chilling or heating the cabin by the heat exchanger.

2. A tramway system that includes a plurality of cabins and a plurality of stations; wherein each cabin includes an ingress liquid reservoir and a heat exchanger; wherein each station includes a liquid chiller and a station liquid reservoir that is equipped with an external liquid valve;
wherein the liquid chiller of each station is designed to bring liquids to a predetermined or specific temperature that are intended to be streamed into the station liquid reservoir of that station; wherein each station liquid reservoir is designed to supply the liquid that is inside that station liquid reservoir to the ingress liquid reservoir of that station through the external liquid valve and an outlet opening, and wherein the liquids that are supplied to that ingress liquid reservoir are intended to be used for chilling or heating relevant cabin by the heat exchanger.
